# NOUVEAU FASCICULE DE BREVET EUROPEEN

(11) **EP 1 777 460 B2**
(45) Date de publication et mention de la décision concernant l'opposition: **18.01.2023**
(45) Mention de la délivrance du brevet: 29.11.2017
(21) Numéro de dépôt: 06122476.2
(22) Date de dépôt: 17.10.2006
(51) Int. Cl.: F23R 3/60, F01D 9/02, F01D 25/24

(54) **Fixation d'une chambre de combustion à l'intérieur de son carter**
Fastening of a combustion chamber inside its housing
Befestigung einer Brennkammer im Inneren ihres Gehäuses

(30) Priorité: 18.10.2005 FR 0510585
(43) Date de publication de la demande: 25.04.2007
(73) Titulaire: Safran Aircraft Engines, 75015 Paris (FR)
(72) Inventeur: Daguenet, Luc, 91100 Corbeil-Essonnes (FR)
(74) Mandataire: Cabinet Beau de Loménie

(56) Documents cités:
- EP-A- 1 010 944
- GB-A- 717 581
- GB-A- 1 539 035
- GB-A- 1 578 474
- US-A- 5 528 896
- US-A1- 2002 184 888
- US-A1- 2003 141 388

## Description

L'invention se rapporte à une turbomachine telle qu'un réacteur d'avion et concerne plus particulièrement un nouveau type de montage d'une chambre de combustion annulaire à l'intérieur du carter.

Dans un turboréacteur d'avion, la chambre de combustion est fixée à l'intérieur d'un carter diffuseur, en amont de la turbine haute pression, par des attaches intérieures et extérieures, le tout formant un module de chambre de combustion. L'invention concerne le système d'attaches extérieures reliant ladite chambre de combustion annulaire à la paroi interne du carter. Le document EP1010944A2 divulgue un tel système ayant les caractéristiques du préambule de la revendication 1, et dans lequel l'extrémité de la pièce de liaison est engagée dans une gorge ouverte latéralement vers l'aval, formant crochet, solidaire de la paroi intérieure du carter.

Dans la suite de cette description, les termes "amont" ou "aval" seront utilisés pour désigner les positions des éléments de structure les uns par rapport aux autres en direction axiale, en prenant pour référence le sens d'écoulement des gaz.

Antérieurement, on a proposé de relier l'extrémité aval de la paroi extérieure de la chambre de combustion à la paroi du carter diffuseur par une pièce de liaison, annulaire, de forme relativement complexe. Cette pièce de liaison est soudée à l'extrémité aval de la paroi extérieure de la chambre de combustion et comporte une bride à son extrémité aval, prolongée radialement vers l'amont et vers l'extérieur par une partie conique. Cette partie conique se termine par un flasque annulaire radial boulonné entre un flasque radial défini à l'extrémité aval de la paroi du carter diffuseur et un autre flasque semblable du carter de turbine situé en aval du carter diffuseur.

Des fenêtres sont pratiquées dans la partie conique pour permettre à l'air issu du compresseur d'atteindre les moyens de refroidissement de la turbine. Le montage décrit ci-dessus assure le positionnement et le maintien de la chambre de combustion dans le carter diffuseur tout en permettant des déplacements relatifs d'origine thermique, permettant de limiter les contraintes. Cependant, cette technologie est coûteuse, notamment parce que la pièce de liaison a une géométrie complexe et aussi parce que les surfaces en contact des flasques doivent être d'une excellente planéité, ce qui nécessite un usinage coûteux.

L'invention permet de surmonter ces difficultés en proposant un montage plus simple tout en réduisant la masse du système ainsi que les pertes de charge aérodynamiques, au passage de l'air à travers ladite pièce de liaison.

Plus particulièrement, l'invention concerne un module de chambre de combustion selon la revendication 1.

Les pattes de fixation sont régulièrement réparties circonférentiellement. Elles peuvent être par exemple au nombre de dix-huit.

Au total, la surface opposée par ces pattes au passage de l'air est notablement inférieure à celle de la partie conique du système connu décrit ci-dessus, toutes choses égales par ailleurs.

Selon un mode de réalisation possible, la paroi intérieure du carter est munie d'une pluralité de gorges formant crochets individualisées et réparties circulairement de façon à correspondre, respectivement, aux pattes de fixation précitées, chaque gorge recevant l'extrémité d'une patte de fixation.

Selon un autre exemple, la paroi intérieure du carter est munie d'une unique gorge continue, annulaire, dans laquelle sont engagées les extrémités de toutes les pattes de fixation. Dans ce cas, les extrémités de toutes les pattes de fixation peuvent être réunies par un anneau engagé dans cette gorge continue.

Dans les exemples définis ci-dessus, les pattes sont conformées pour que, à froid, un serrage s'exerce entre l'extrémité de chaque patte et la surface radialement la plus externe de la gorge ou une zone adjacente de la surface interne dudit carter.

Selon une autre possibilité, l'extrémité de chaque patte est conformée avec une gorge ouverte vers l'amont et coopérant avec une gorge correspondante précitée du carter.

Dans ce mode de réalisation, les pattes sont conformées pour que, à froid, un serrage s'exerce entre la surface radialement la plus externe de la gorge de chaque patte et la surface radialement la plus interne de la gorge correspondante dudit carter.

L'invention sera mieux comprise et d'autres avantages de celle-ci apparaîtront plus clairement à la lumière de la description qui va suivre de plusieurs modes de réalisation possibles, donnée uniquement à titre d'exemple et faite en référence aux dessins annexés, dans lesquels :
- la figure 1 est une vue schématique en coupe radiale de la chambre de combustion installée dans son carter, conformément à l'invention ;
- la figure 2 est une vue de détail à plus grande échelle de l'encadré II de la figure 1 ;
- la figure 3 est une vue de détail en perspective selon la flèche III de la figure 1 ;
- la figure 4 est une vue de détail semblable à la figure 3 illustrant une variante ; et
- la figure 5 est une vue de détail semblable à la figure 2, illustrant une autre variante.

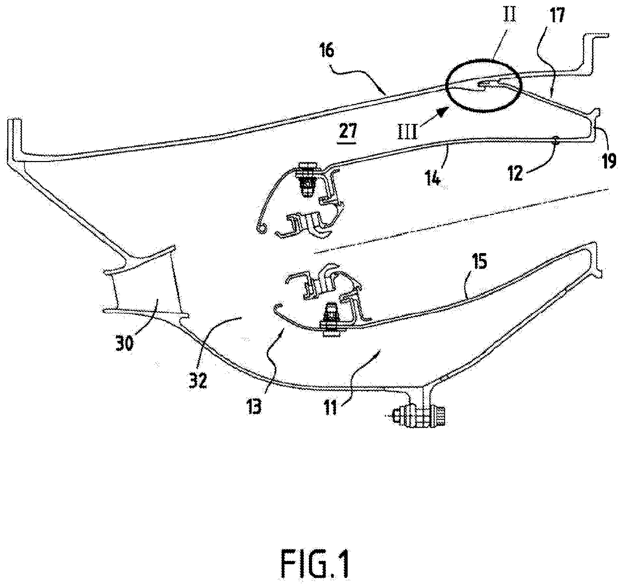

En considérant plus particulièrement la figure 1, on a représenté schématiquement, en demi-coupe, les éléments essentiels d'une chambre de combustion 11 installée à l'intérieur d'un carter diffuseur 16. L'ensemble forme un module de chambre de combustion d'une turbomachine telle qu'un réacteur d'avion. On sait que ce module est intercalé entre un compresseur situé en amont et une turbine installée en aval. L'air sous pression est introduit par une tubulure 30 dans une cavité annulaire 32 à l'intérieur de laquelle est installée la chambre de combustion. Cette dernière comporte une paroi extérieure 14 annulaire, une paroi intérieure 15 annulaire et un fond de chambre 13, également annulaire où s'opère l'injection du carburant et son mélange avec de l'air fourni par le compresseur. L'extrémité aval 12 de la paroi extérieure 14 de la chambre de combustion est reliée à la paroi du carter diffuseur 16 par une pièce de liaison 17. Cette dernière est soudée à ladite extrémité aval 12.

Une autre partie de l'air circule dans la cavité annulaire 32 tout autour de la chambre de combustion, notamment dans l'espace 27 défini entre le carter 16 et la paroi extérieure 14 de ladite chambre de combustion.

A l'exception de la forme et du montage de la pièce de liaison annulaire 17 reliant l'extrémité aval 12 de la paroi extérieure 14 au carter 16, tout cet agencement est classique et ne sera pas décrit plus en détail.

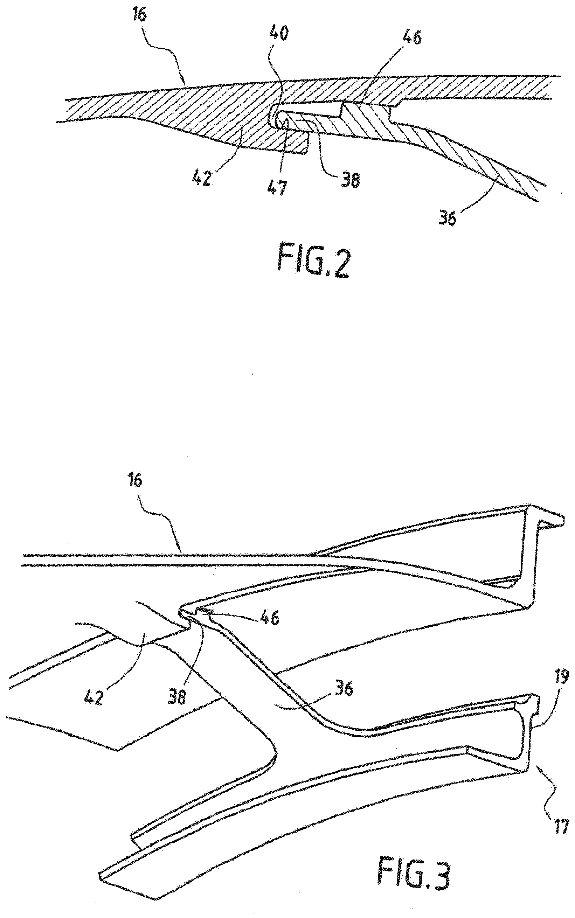

Comme on le voit sur les figures 2 et 3, la pièce de liaison 17 comporte une bride de liaison 19 à son extrémité aval et une pluralité de pattes de fixation 36. La bride de liaison 19, annulaire, est soudée à l'extrémité aval 12 de la paroi extérieure 14 de la chambre de combustion.

Les pattes de fixation 36 sont orientées radialement à la fois vers l'extérieur et vers l'amont. Chaque extrémité 38 de patte est engagée dans une gorge 40 ouverte latéralement vers l'aval. La gorge 40 forme ainsi un crochet. Chaque gorge est définie dans un bossage 42 en surépaisseur de la paroi du carter 16, faisant saillie de la face intérieure de celle-ci. Ainsi, le carter comporte autant de bossages internes qu'il y a de pattes 36 et chaque bossage 42 est creusé latéralement vers l'aval pour définir une gorge 40 formant crochet, précitée. Les pattes 36 et les bossages 42 sont régulièrement répartis circonférentiellement. Ils sont au nombre de dix-huit dans l'exemple décrit. Chaque gorge 40 reçoit donc l'extrémité 38 d'une patte de fixation 36 correspondante. La partie extrême de chaque patte comporte un bossage 46 en contact avec la surface radialement la plus externe de la gorge ou (comme représenté) une zone voisine de la surface interne du carter. Ce bossage 46 se situe ici à une certaine distance de l'extrémité de la patte.

Les pattes 36 sont conformées pour que, à froid, un serrage s'exerce entre l'extrémité de la patte, en l'occurrence ici le bossage 46, et la surface radialement la plus externe de la gorge ou (selon l'exemple) la surface interne dudit carter 16, au voisinage de cette gorge. Le montage est tel qu'un jeu prédéterminé faible existe à froid entre la face 47 radialement la plus interne de la gorge formant crochet et l'extrémité 38 de la patte qui pénètre dans cette gorge. Le serrage évolue en fonctionnement, compte tenu de l'augmentation de température. Pour tous les points de fonctionnement stabilisés, il y a serrage sur l'une des deux faces de la gorge. A chaud, le serrage est reporté essentiellement sur la face 47 radialement la plus interne de la gorge 40. Cet agencement avec double serrage évoluant en fonction de la température permet de diminuer la valeur maximum du serrage, en fonctionnement et donc de limiter les contraintes.

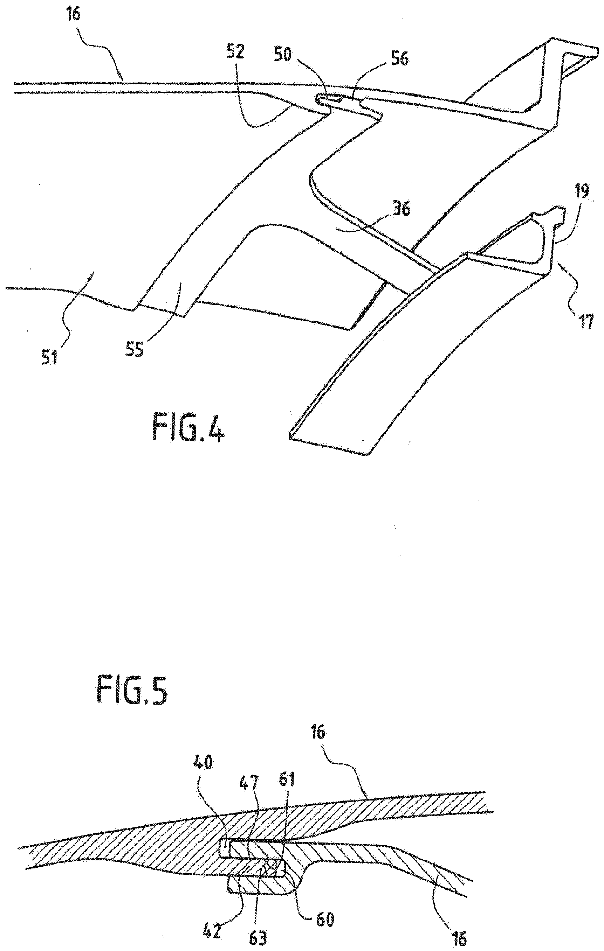

Dans la variante de la figure 4, la paroi intérieure du carter 16 est munie d'une unique gorge 50 précitée, continue définie dans une nervure annulaire 52 faisant saillie de la face interne du carter. La gorge 50 est pratiquée dans cette nervure et débouche latéralement vers l'aval. Si la pièce annulaire 17 est conforme à celle qui est illustrée sur la figure 3, les extrémités des pattes de fixation 36 sont engagées dans cette gorge unique. Cependant, ce mode de réalisation à gorge unique 50 est plus particulièrement avantageux lorsque, comme représenté, les extrémités de toutes les pattes de fixation 36 sont réunies par un anneau 55 engagé dans la gorge 50 formant crochet, continue. Cet anneau comporte une nervure 56 faisant saillie de sa surface externe, laquelle est en contact, à froid, contre la surface interne du carter 16. Cette variante assure plus de rigidité à l'assemblage.

Dans l'exemple de la figure 5, l'extrémité de chaque patte est conformée de façon à présenter une gorge 60 ouverte vers l'amont, susceptible de coopérer en position de montage avec l'une des gorges 40 correspondantes du carter. Les pattes 36 sont conformées pour que, à froid, un serrage s'exerce entre la surface radialement la plus externe 61 de la gorge 60 définie à l'extrémité de chaque patte et la surface radialement la plus interne 47 de la gorge correspondante du carter. Un jeu est défini à froid entre la surface radialement la plus interne 63 de la gorge de la patte et la surface interne du bossage 42 dans lequel est définie la gorge 40 correspondante du carter. A chaud, ce jeu disparaît et le serrage se reporte à cet emplacement.

Bien entendu, les gorges 40 pourraient être remplacées par une seule gorge annulaire continue et les gorges 60 pourraient n'en former qu'une seule, annulaire, définie dans un anneau reliant les pattes 36.

## Revendications

1. Module de chambre de combustion comprenant une chambre de combustion annulaire et un carter extérieur, la chambre de combustion étant rattachée au carter extérieur, l'extrémité aval d'une paroi externe (14) de ladite chambre de combustion étant fixée à une pièce de liaison (17) annulaire, **caractérisé en ce que** la pièce de liaison annulaire (17) comporte une pluralité de pattes de fixation (36) orientées radialement vers l'extérieur et vers l'amont, chaque extrémité de patte étant engagée dans une gorge (40), ouverte latéralement vers l'aval, formant crochet, solidaire de la paroi intérieure du carter (16), dans lequel la pièce de liaison (17) comprend une bride de liaison (19), annulaire, à son extrémité aval, la bride de liaison (19) étant soudée à l'extrémité aval (12) de la paroi externe (14) de la chambre de combustion.

2. Module selon la revendication 1, **caractérisé en ce que** lesdites pattes de fixation (36) sont régulièrement réparties circonférentiellement.

3. Module selon la revendication 2, **caractérisé en ce que** lesdites pattes de fixation (36) sont au nombre de dix-huit.

4. Module selon l'une des revendications précédentes, **caractérisé en ce que** la paroi intérieure dudit carter est munie d'une pluralité de gorges (40) formant crochet, individualisées et réparties circulairement de façon à correspondre, respectivement, aux pattes de fixation (36) précitées, chaque gorge recevant l'extrémité d'une patte de fixation.

5. Module selon l'une des revendications 1 à 3, **caractérisé en ce que** la paroi intérieure du carter est munie d'une unique gorge (50) continue, annulaire, dans laquelle sont engagées les extrémités de toutes les pattes de fixation (36).

6. Module selon la revendication 5, **caractérisé en ce que** les extrémités de toutes les pattes de fixation sont réunies par un anneau (55) engagé dans ladite gorge continue.

7. Module selon l'une des revendications précédentes, **caractérisé en ce que** lesdites pattes de fixation (36) sont conformées pour que, à froid, un serrage s'exerce entre l'extrémité de chaque patte et la surface radialement la plus externe d'une telle gorge ou la surface interne dudit carter.

8. Module selon la revendication 7, **caractérisé en ce que** la partie extrême de chaque patte comporte un bossage (46) en contact avec ladite surface radialement la plus externe de la gorge ou la surface interne dudit carter.

9. Module selon l'une des revendications 1 à 4, **caractérisé en ce que** l'extrémité de chaque patte est conformée avec une gorge (60) ouverte vers l'amont et coopérant avec une gorge (40) précitée, correspondante, dudit carter.

10. Module selon la revendication 9, **caractérisé en ce que** lesdites pattes (36) sont conformés pour que, à froid, un serrage s'exerce entre la surface radialement la plus externe de la gorge de chaque patte et la surface radialement la plus interne de la gorge correspondante dudit carter.

11. Turbomachine comportant un module de chambre de combustion selon l'une des revendications précédentes.

## Patentansprüche

1. Brennkammermodul, umfassend eine ringförmige Brennkammer und ein Außengehäuse, wobei die Brennkammer am Außengehäuse befestigt ist, wobei das stromabwärtige Ende einer Außenwand (14) der Brennkammer an einem ringförmigen Verbindungsstück (17) befestigt ist, **dadurch gekennzeichnet, dass** das Verbindungsstück eine Vielzahl von Befestigungslaschen (36) umfasst, die radial nach außen und stromaufwärts gerichtet sind, wobei jedes Laschenende in eine Rille (40) eingreift, die seitlich stromabwärts offen ist, einen Haken bildet, mit der Innenwand des Gehäuses (16) verbunden ist, wobei das Verbindungsstück (17) an seinem stromabwärtigen Ende einen ringförmigen Verbindungsflansch (19) umfasst, wobei der Verbindungsflansch (19) mit dem stromabwärtigen Ende (12) der Außenwand (14) der Brennkammer verschweißt ist.

2. Modul gemäß Anspruch 1, **dadurch gekennzeichnet, dass** die Befestigungslaschen (36) regelmäßig in Umfangsrichtung verteilt sind.

3. Modul gemäß Anspruch 2, **dadurch gekennzeichnet, dass** die Befestigungslaschen (36) in der Anzahl von achtzehn vorhanden sind.

4. Modul gemäß einem der vorhergehenden Ansprüche, **dadurch gekennzeichnet, dass** die Innenwand des Gehäuses mit einer Vielzahl von Rillen (40) versehen ist, die einen Haken bilden, einzeln ausgebildet und in Umfangsrichtung verteilt sind, um jeweils den vorgenannten Befestigungslaschen (36) zu entsprechen, wobei jede Rille das Ende einer Befestigungslasche aufnimmt.

5. Modul gemäß einem der Ansprüche 1 bis 3, **dadurch gekennzeichnet, dass** die Innenwand des Gehäuses mit einer einzigen durchgehenden, ringförmigen Rille (50) versehen ist, in der die Enden aller Befestigungslaschen (36) in Eingriff sind.

6. Modul gemäß Anspruch 5, **dadurch gekennzeichnet, dass** die Enden aller Befestigungslaschen durch einen Ring (55), der in der durchgehenden Rille in Eingriff ist, vereint sind.

7. Modul gemäß einem der vorhergehenden Ansprüche, **dadurch gekennzeichnet, dass** die Befestigungslaschen (36) dazu vorgesehen sind, dass im kalten Zustand eine Klemmkraft zwischen dem Ende jeder Lasche und der radial äußersten Fläche einer solchen Rille oder der Innenfläche des Gehäuses ausgeübt wird.

8. Modul gemäß Anspruch 7, **dadurch gekennzeichnet, dass** der äußerste Teil jeder Lasche einen Wulst (46) umfasst, der mit der radial äußersten Fläche der Rille oder der Innenfläche des Gehäuses in Kontakt ist.

9. Modul gemäß einem der Ansprüche 1 bis 4, **dadurch gekennzeichnet, dass** das Ende jeder Lasche mit einer Rille (60) ausgebildet ist, die stromaufwärts offen ist und mit einer entsprechenden vorgenannten Rille (40) des Gehäuses zusammenwirkt.

10. Modul gemäß Anspruch 9, **dadurch gekennzeichnet, dass** die Laschen (36) dazu vorgesehen sind, dass im kalten Zustand eine Klemmkraft zwischen der radial äußersten Fläche der Rille jeder Lasche und der radial innersten Fläche der entsprechenden Rille des Gehäuses ausgeübt wird.

11. Turbomaschine, umfassend ein Brennkammermodul gemäß einem der vorhergehenden Ansprüche.

## Claims

1. A combustion chamber module comprising an annular combustion chamber and an outer casing, the combustion chamber being attached to the outer casing, the downstream end of an outer wall (14) of said combustion chamber being secured to an annular connection part (17), **characterized in that** the annular connection part (17) includes a plurality of fastener tabs (36) directed radially outwards and upstream, each tab end being engaged in a hook-forming groove (40) that is laterally open in a downstream direction and that is secured to the inside wall of the casing (16), wherein the connection piece (17) comprises an annular connection flange (19) at its downstream end, the connection flange (19) being welded to the downstream end (12) of the outer wall (14) of the combustion chamber.

2. A module according to claim 1, **characterized in that** said fastener tabs (36) are regularly distributed circumferentially.

3. A module according to claim 2, **characterized in that** said fastener tabs (36) are eighteen in number.

4. A module according to one of the preceding claims, **characterized in that** the inside wall of said casing is provided with a plurality of individualized hook-forming grooves (40) distributed circularly so as to correspond with respective ones of said fastener tabs (36), each groove receiving the end of one fastener tab.

5. A module according to one of claims 1 to 3, **characterized in that** the inside wall of the casing is provided with a single groove (50) that is continuous and annular, and that has the ends of all of the fastener tabs (36) engaged therein.

6. A module according to claim 5, **characterized in that** the ends of all of the fastener tabs are united by a ring (55) that is engaged in said continuous groove.

7. A module according to one of the preceding claims, **characterized in that** said fastener tabs (36) are shaped in such a manner that, when cold, clamping is exerted between the end of each tab and the radially outermost surface of such a groove or the inside surface of said casing.

8. A module according to claim 7, **characterized in that** the end portion of each tab includes a projection (46) in contact with said radially outermost surface of the groove or the inside surface of said casing.

9. A module according to any one of claims 1 to 4, **characterized in that** the end of each tab is shaped with a groove (60) that is open in an upstream direction and that co-operates with a said corresponding groove (40) of said casing.

10. A module according to claim 9, **characterized in that** said tabs (36) are shaped so that, when cold, clamping is exerted between the radially outermost surface of the groove of each tab and the radially innermost surface of the corresponding groove of said casing.

11. A turbomachine including a combustion chamber module according to claim 1.
